# EUROPEAN PATENT APPLICATION

(11) **EP 4 636 443 A1**
(43) Date of publication of application: **22.10.2025**
(21) Application number: 23903255.0
(22) Date of filing: 27.11.2023
(51) Int. Cl.: G01V 8/20, G01J 1/02, G02B 3/00

(54) **HUMAN BODY DETECTION DEVICE**

(30) Priority: 16.12.2022 JP 2022201478
(71) Applicant: Panasonic Corporation, Osaka 571-8501 (JP)
(72) Inventor: SONO, Takahiro, Kadoma-shi Osaka 571-0057 (JP)
(74) Representative: Appelt, Christian W.
(86) International application number: PCT/JP2023/042342
(87) International publication number: WO 2024/127961

(57) **Abstract**

A human body detection device is provided which is configured to sensitively perform both approach detection and traverse detection. A human body detection device (1) includes a lens array (3). The lens array (3) has a first area (95) including one or more first lenses (311p, 311q) and a second area (96) including one or more second lenses (311w). The one or more first lenses (311p, 311q) are respectively one or more lenses in each of which one of a plurality of first infrared reception paths defined by a corresponding one of the one or more first lenses (311p, 311q) and a plurality of detectors of a pyroelectric element and one of a plurality of second infrared reception paths defined by one lens (311) adjacent to the corresponding one of the one or more first lenses (311p, 311q) and the plurality of detectors overlap each other. The one or more second lenses (311w) are respectively one or more lenses in each of which a plurality of first infrared reception paths defined by a corresponding one of the one or more second lenses (311w) and the plurality of detectors and a plurality of second infrared reception paths defined by one lens (311) adjacent to the corresponding one of the one or more second lenses (311w) and the plurality of detectors do not overlap each other.

## Description

### Technical Field

The present disclosure relates to human body detection devices and more specifically relates to a human body detection device including a pyroelectric element configured to detect infrared radiation from a human body.

### Background Art

Patent Literature 1 describes an infrared body detector including: a pyroelectric element; and an optical system disposed in front of a light receiving surface of the pyroelectric element. The pyroelectric element includes a plurality of device elements having different output voltage polarities. The optical system includes a mirror and a lens body. The lens body includes a plurality of lenses. In the infrared body detector, an output of the pyroelectric element is amplified by an amplifier, and then, the output is caused to pass through a band-pass filter, and a comparison circuit determines whether or not the output is higher than or equal to a reference level. Thus, the infrared body detector can detect the presence/absence or movement of a person.

For example, when a distance from the pyroelectric element to a detection area is long as in the case where a human body detection device disposed on a ceiling of a warehouse detects a person passing through a path on the lower side thereof, it is desired that both approach detection and traverse detection can sensitively be performed in the detection area. Note that the approach detection is detection of a person moving at a moving velocity in which an approach component (a speed component approaching to the pyroelectric element) is greater than a traverse component (a speed component of a person crossing a light receiving pathway of infrared radiation from the person). The traverse detection is detection of a person moving at a moving velocity in which the traverse component is greater than the approach component.

### Citation List

### Patent Literature

Patent Literature 1 : JP 2000-329860 A

### Summary of Invention

It is an object of the present disclosure to provide a human body detection device configured to sensitively perform both approach detection and traverse detection.

A human body detection device of an aspect of the present disclosure includes a pyroelectric element, a lens array, and a determination unit. The pyroelectric element includes a plurality of detectors. The lens array includes a plurality of lenses configured to condense infrared radiation onto the pyroelectric element. The determination unit is configured to output a human body detection signal on a basis of an output signal of the pyroelectric element. Each of the plurality of lenses and the plurality of detectors define a plurality of infrared reception paths. The plurality of infrared reception paths include a plurality of first infrared reception paths and a plurality of second infrared reception paths. The plurality of first infrared reception paths are defined by an arbitrary one lens of the plurality of lenses and the plurality of detectors. The plurality of second infrared reception paths are defined by one lens included in the plurality of lenses and adjacent to the arbitrary one lens and the plurality of detectors. The lens array has a first area and a second area. The first area includes one or more first lenses of the plurality of lenses. The second area includes one or more second lenses of the plurality of lenses. The one or more first lenses are respectively one or more lenses in each of which one first infrared reception path of the plurality of first infrared reception paths defined by a corresponding one of the one or more first lenses and the plurality of detectors and one second infrared reception path of the plurality of second infrared reception paths defined by one lens included in the plurality of lenses and adjacent to the corresponding one of the one or more first lenses and the plurality of detectors overlap each other. The one or more second lenses are respectively one or more lenses in each of which the plurality of first infrared reception paths defined by a corresponding one of the one or more second lenses and the plurality of detectors and the plurality of second infrared reception paths defined by one lens included in the plurality of lenses and adjacent to the corresponding one of the one or more second lenses and the plurality of detectors do not overlap each other.

### Brief Description of Drawings

FIG. 1 is a perspective view of a human body detection device according to the present embodiment;
FIG. 2 is a perspective view of a detection space and a detection area of the human body detection device;
FIG. 3 is an illustrative view of an approach component and a traverse component of a moving velocity of a person;
FIG. 4 is an exploded perspective view of the human body detection device;
FIG. 5 is a plan view of a case of FIG. 4 when viewed from a cylindrical part of the case;
FIG. 6 is a block diagram of a circuit unit of a detection sensor shown in FIG. 4;
FIG. 7A is a plan view of a surface of a pyroelectric element;
FIG. 7B is a sectional view along the line X1-X1 of FIG. 7A;
FIG. 8 is a plan view of a relationship between a detection area and an individual detection area;
FIG. 9 is an enlarged view of a part of FIG. 8;
FIG. 10 is a plan view of the interior of a lens array of FIG. 4 viewed from a back side of the lens array; and
FIG. 11 is a plan view of the interior of a lens array of a third variation viewed from a back side of the lens array.

### Description of Embodiments

### (1) Embodiment

A human body detection device according to the present embodiment will be described below with reference to the drawings.

### (1-1) Overview of Human Body Detection Device

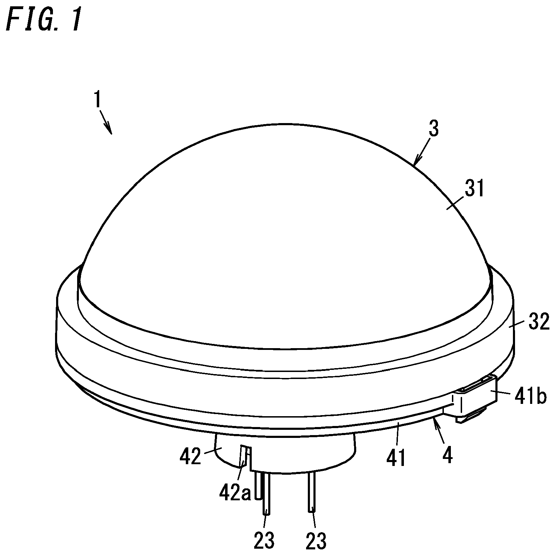

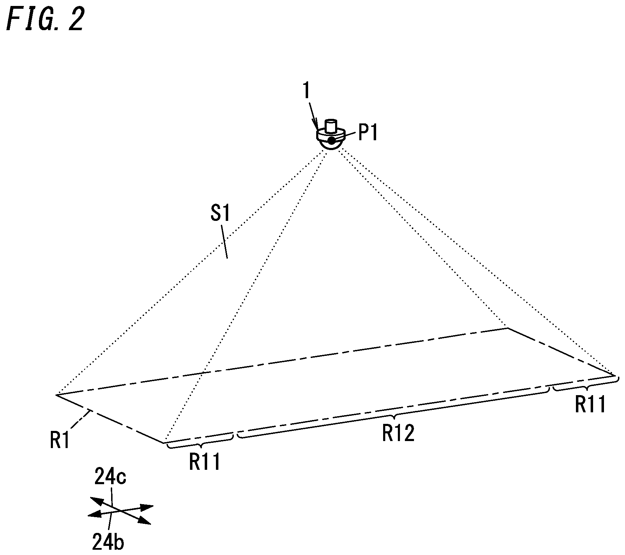

As shown in FIGS. 1 and 2, a human body detection device 1 according to the present embodiment detects infrared radiation from a person to detect the person. The human body detection device 1 is suitable for, for example, being installed on a ceiling of a warehouse to detect a person passing through a path on the lower side thereof.

In the following description, an example is shown in which the human body detection device 1 is installed on a ceiling of a warehouse to detect a person passing through a path in the warehouse. Note that the human body detection device 1 is not limited to being used in the warehouse. For example, the human body detection device 1 may be installed in a place (e.g., a street light) other than the warehouse to detect the presence of a person passing around the place. Note that an installation place of the human body detection device 1 is not limited to places, such as the ceiling and the street lamp, higher than a person but may be a wall surface.

The human body detection device 1 is installed on the ceiling of the warehouse such that a detection direction of the human body detection device 1 is directed downward. In this way, the human body detection device 1 detects, from its installation location, a person passing through a path (the path of the warehouse) on the lower side thereof. The path of the warehouse has a rectangular shape (i.e., a belt shape). Therefore, a detection area R1 of the human body detection device 1 is formed on the path to have a rectangular shape (i.e., a belt shape) corresponding to the shape of the path of the warehouse. Note that since paths of warehouses have a rectangular shape in many cases, the detection area R1 preferably has a rectangular shape. The present embodiment shows an example in which the detection area R1 has a rectangular shape, but the shape of the detection area R1 is not limited to the rectangular shape.

The human body detection device 1 has a pyramidal detection space S1 defined by: an installation location P1 of the human body detection device 1 on the ceiling of the warehouse; and the detection area R1 set on the path of the warehouse. The human body detection device 1 detects a person moving across the detection space S1.

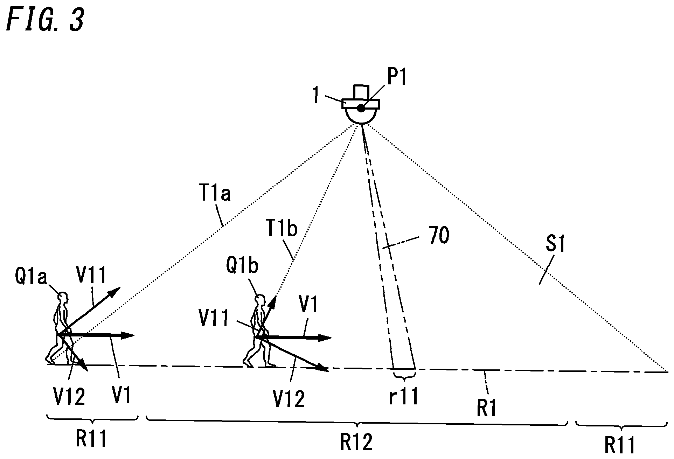

More specifically, for a person Q1a moving in edge parts R11 (first detection areas) of the detection area R1, the feature is that an approach component (approach speed) V11 of a moving velocity V1 of the person Q1a is large, and a traverse component (traverse speed) V12 of the moving velocity V1 of the person Q1a is small as shown in FIG. 3. Moreover, for a person Q1b moving in a center part R12 (a second detection area) of the detection area R1, the feature is that an approach component (approach speed) V11 of a moving velocity V1 of the person Q1b is small, and a traverse component (traverse speed) V12 of the moving velocity V1 of the person Q1b is large.

Therefore, the human body detection device 1 is set such that in the edge parts R11 of the detection area R1, approach detection is sensitively performed, and in the center part R12 of the detection area R1, traverse detection is sensitively performed. That is, in the present embodiment, the first detection areas in which the approach detection is sensitively performed are disposed in the edge parts R11 of the detection area R1, and the second detection area in which the traverse detection is sensitively performed is disposed in the center part R12 of the detection area R1.

Note that the "moving velocity V1" is a vector having an orientation from a location of the person Q1a, Q1b toward a travel direction of the person Q1a, Q1b and having a magnitude of an absolute value of the moving velocity V1. The "approach component V11" is a component parallel to a propagation pathway T1a, T1b of infrared radiation from the person Q1a, Q1b at the moving velocity V1 toward the human body detection device 1 (i.e., a component of the person Q1a, Q1b approaching the human body detection device 1). The "traverse component V12" is a component orthogonal to the propagation pathway T1a, T1b at the moving velocity V1 (i.e., a traverse component across the propagation pathway T1a, T1b). Moreover, the "approach detection" is detection of a person moving at a moving velocity in which the approach component V11 is greater than the traverse component V12. Moreover, the "traverse detection" is detection of a person moving at a moving velocity in which the traverse component V12 is greater than the approach component V11.

### (1-2) Configuration of Human Body Detection Device

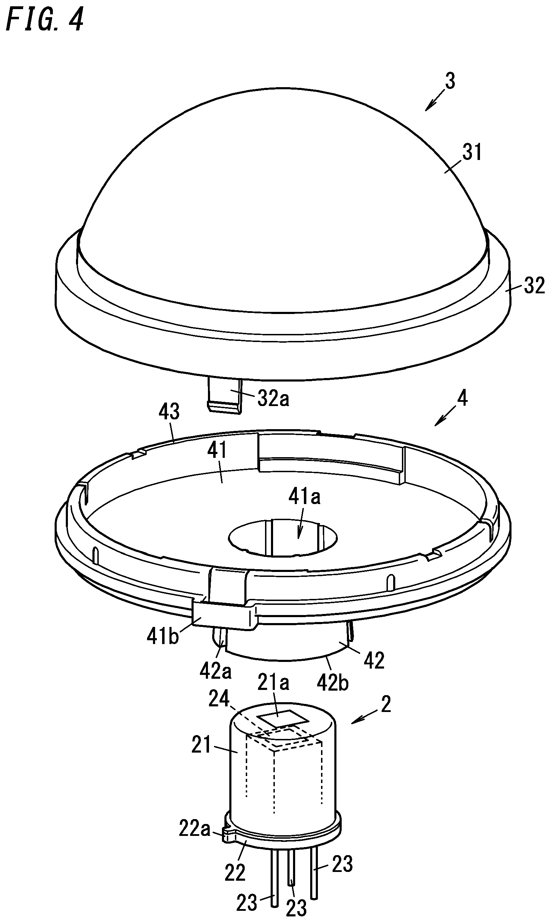

As shown in FIG. 4, the human body detection device 1 includes a detection sensor 2, a lens array 3, and a case 4.

The detection sensor 2 receives infrared radiation from a person in the detection area R1, and based on the infrared radiation thus received, the detection sensor 2 detects the presence/absence of the person in the detection area R1. The detection sensor 2 is, for example, a CAN package sensor. More specifically, the detection sensor 2 includes a housing 21 (also referred to as a cap), substrate 22 (also referred to as a stem), a plurality of lead wires 23, and a circuit unit including a pyroelectric element 24.

The housing 21 has, for example, a can shape (i.e., a cylindrical shape having: a tip end surface provided with a bottom; and a base end surface having an opening). The tip end surface of the housing 21 has, for example, a window part 21a having a rectangular shape for letting in the infrared radiation from the person who is a detection target. The window part 21a is sealed with a transparent plate member (e.g., a glass pane or a transparent resin plate).

The substrate 22 is a member that closes the opening in the base end surface of the housing 21 and supports the plurality of lead wires 23. The substrate 22 has, for example, a disk shape. The substrate 22 is attached at the base end of the housing 21 to close the opening in the base end surface of the housing 21. The substrate 22 has an outer peripheral surface provided with a projection 22a can be fitted to positioning recess 42a, which will be described later, of the case 4.

The plurality of lead wires 23 include a lead wire 23 for outputting an output signal of the circuit unit to the outside, a lead wire 23 for a power source, and a lead wire 23 for grounding. The plurality of lead wires 23 are provided for the substrate 22 to penetrate through the substrate 22. The plurality of lead wires 23 are led out to the outside of the interior of the housing 21 through the substrate 22. The plurality of lead wires 23 are electrically connected to the circuit unit in the housing 21.

The circuit unit including the pyroelectric element 24 is housed in the interior of the housing 21. The pyroelectric element 24 is disposed at the back of the window part 21a of the housing 21.

The lens array 3 is disposed in front of the detection sensor 2 to condense the infrared radiation from the person in the detection area R1 onto the pyroelectric element 24 in the detection sensor 2. The lens array 3 has, for example, a semispherical shell shape. The lens array 3 includes a lens array body 31 and an engagement part 32.

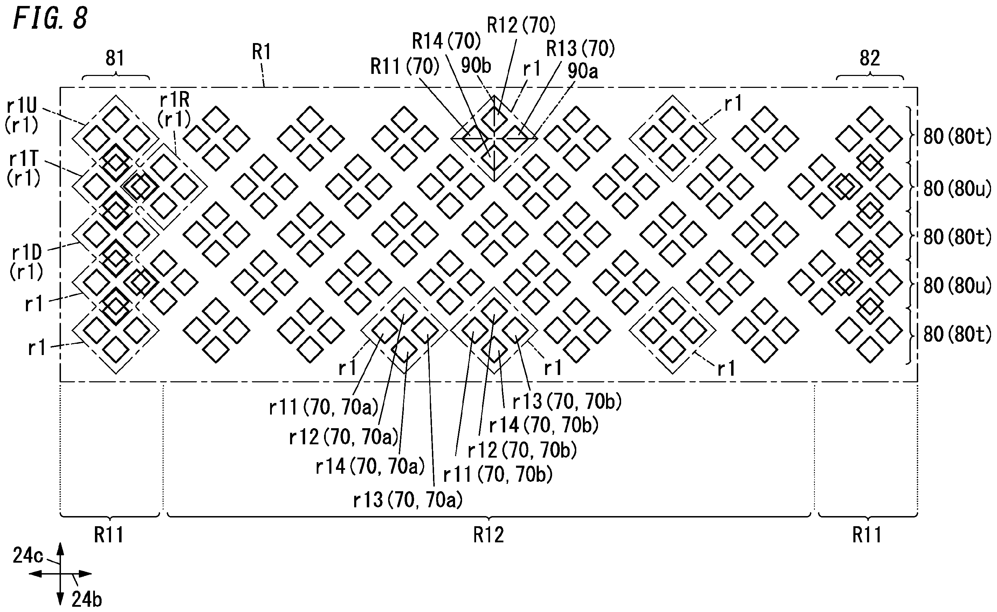

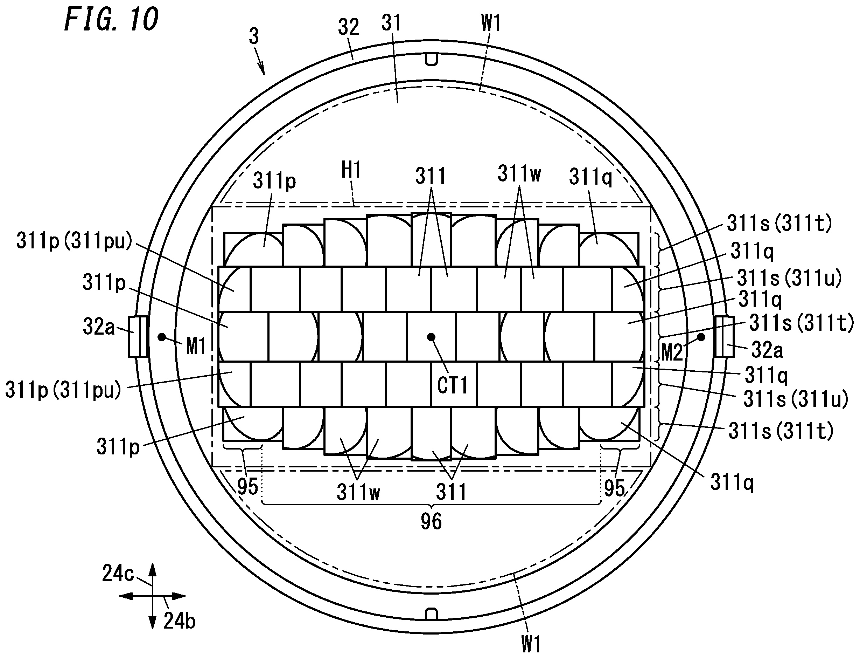

The lens array body 31 has a semispherical shell shape. The lens array body 31 has a back surface which is semi-spherically concave. The back surface of the lens array body 31 is provided with a plurality of lenses 311 (see FIG. 10). The plurality of lenses 311 form individual detection areas r1 in the detection area R1 (see FIG. 8). The individual detection areas r1 correspond to the lenses 311 on a one-to-one basis. Each lens 311 condenses the infrared radiation from the person passing through a corresponding one of the individual detection areas r1 onto a light receiving surface 24a of the pyroelectric element 24. Therefore, the detection area R1 has the same number of individual detection areas r1 as the plurality of lenses 311. The detection area R1 is formed from the plurality of individual detection areas r1 corresponding to the plurality of lenses 311 on a one-to-one basis. The shape of the detection area R1 is a shape that includes the arrangement of the plurality of individual detection areas r1.

Note that in the present embodiment, as described later, a shape H1 of the arrangement of the plurality of lenses 311 (lens arrangement) is a rectangular shape (i.e., a belt shape), and thereby, the shape of the arrangement of the plurality of individual detection areas r1 is a rectangular shape (i.e., a belt shape). Moreover, the shape of the arrangement of the plurality of individual detection areas r1 is the rectangular shape (i.e., the belt shape), and thereby, the detection area R1 has a rectangular shape (i.e., a belt shape). Details of the arrangement of the plurality of lenses 311 will be described later.

The engagement part 32 is a part to be fitted to a peripheral wall part 43, which will be described later, of the case 4. The engagement part 32 has, for example, a shortened cylindrical shape. The engagement part 32 protrudes from a peripheral end of the lens array body 31 backward of the lens array body 31. The engagement part 32 has a rear end provided with a pair of pawls 32a which are to be caught by a pair of catches 41b, which will be described later, of the case 4.

The case 4 is a member that houses the detection sensor 2 and supports the lens array 3. The case 4 includes a substrate 41, a cylindrical part 42, and the peripheral wall part 43.

The substrate 41 has, for example, a disk shape. The substrate 41 has a hole 41a at the center thereof. Infrared radiation transmitted through the lens array body 31 passes through the hole 41a. The substrate 41 has an outer peripheral part provided with the pair of catches 41b which are to catch the pair of pawls 32a of the lens array 3.

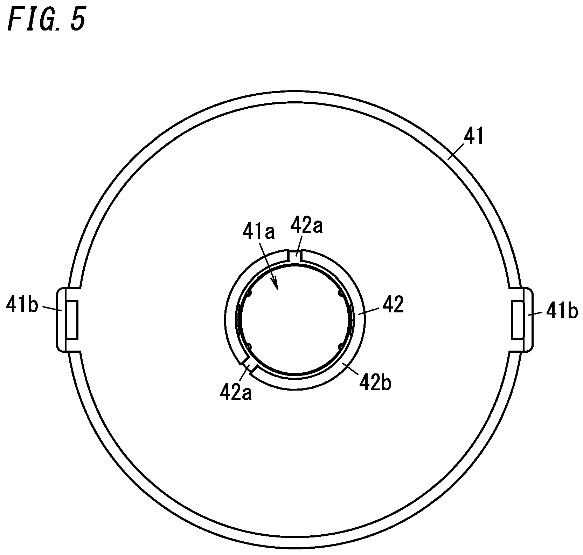

The cylindrical part 42 is a part in which the detection sensor 2 is to be housed. The cylindrical part 42 is circularly cylindrical. The cylindrical part 42 protrudes backward from the center of a rear face of the substrate 41. The cylindrical part 42 has an internal space which is in communication with the hole 41a at the center of the substrate 41. The cylindrical part 42 has a circularly annular rear end 42b provided with the positioning recesses 42a at two locations in a circumferential direction, and to the positioning recesses 42a, the projection 22a of the detection sensor 2 can be fitted (see FIG. 5). One of the positioning recesses 42a is a positioning recess for aligning the orientation around the central axis of the detection sensor 2 with an orientation of 0 degrees. The other of the positioning recesses 42a is a positioning recess for aligning the orientation around the central axis of the detection sensor 2 with an orientation of 45 degrees.

Note that the "orientation of 0 degrees" is the orientation around the central axis of the detection sensor 2 in which one side of the light receiving surface 24a, which has a square shape and will be described later, of the pyroelectric element 24 is parallel or orthogonal to a longitudinal direction of a lens arrangement shape (rectangular shape) of the lens array 3 (i.e., a first diagonal line 24b, which will be described later, of the pyroelectric element 24 is tilted at 45 degrees with respect to the longitudinal direction of the lens arrangement shape). Moreover, the "orientation of 45 degrees" is the orientation around the central axis of the detection sensor 2 in which one side of the light receiving surface 24a, which has a square shape and will be described later, of the pyroelectric element 24 is tilted at 45 degrees to the longitudinal direction of the lens arrangement shape (i.e., a first diagonal line 24b, which will be described later, of the pyroelectric element 24 is parallel to the longitudinal direction of the lens arrangement shape). Note that in the present embodiment, the projection 22a of the detection sensor 2 is fitted in the positioning recess 42a for aligning the orientation around the central axis of the detection sensor 2 with the orientation of 45 degrees, of the two positioning recess 42a of the cylindrical part 42.

The peripheral wall part 43 is a part to be fitted to the engagement part 32 of the lens array 3. The peripheral wall part 43 protrudes forward from an outer peripheral edge of a front face of the substrate 41 and is provided over the circumferential direction of the front face of the substrate 41.

In the human body detection device 1, the detection sensor 2 is housed in the interior of the cylindrical part 42 of the case 4. In this housing state, the window part 21a of the detection sensor 2 is disposed at the back of the hole 41a of the substrate 41 of the case 4. Moreover, the projection 22a of the detection sensor 2 is fitted in one of the positioning recesses 42a of the substrate 41. Thus, the orientation around the central axis of the detection sensor 2 is fixed in the "orientation of 45 degrees". Moreover, the lens array 3 is disposed in front of the case 4. In this disposition state, the pair of pawls 32a of the lens array 3 is caught by the pair of catches 41b of the case 4. Thus, the lens array 3 is fixed to the case 4.

### (1-3) Details of Circuit Unit of Detection Sensor

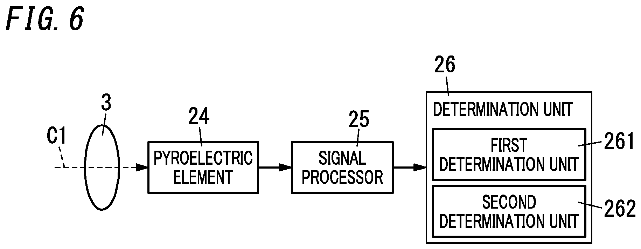

As shown in FIG. 6, the circuit unit of the detection sensor 2 includes the pyroelectric element 24, a signal processor 25, and a determination unit 26.

The pyroelectric element 24 is an infrared receiving element that receives infrared radiation C1 from the person in the detection area R1 via the lens array 3.

The signal processor 25 performs signal processing on the output signal of the pyroelectric element 24 to output a voltage signal proportional to the output signal. More specifically, the signal processor 25 converts current signals which are output signal output from the pyroelectric element 24 into voltage signals, and the signal processor 25 amplifies a voltage signal included in the converted voltage signals and falling within a predetermined frequency range (e.g., 0.1 Hz to 10 Hz) and outputs the amplified signal.

The determination unit 26 outputs a human body detection signal on the basis of the level of the voltage signal output from the signal processor 25 (i.e., on the basis of the output signal of the pyroelectric element 24). The determination unit 26 includes a first determination unit 261 and a second determination unit 262. The first determination unit 261 compares a first threshold and the level of the voltage signal with each other, and when determining that the level of the voltage signal exceeds the first threshold, the first determination unit 261 outputs the human body detection signal. The second determination unit 262 compares a second threshold and the level of the voltage signal with each other, and when a set of changes that the level of the voltage signal exceeds the second threshold, falls under the second threshold, and then exceeds the second threshold again continues a predetermined plurality of number of times, the second determination unit 262 outputs the human body detection signal. Note that the first threshold and the second threshold are absolute values. Moreover, the second threshold is a value smaller than the first threshold. For example, the first threshold is 0.6 V, and the second threshold is 0.3 V.

Note that the first threshold is set in advance on the basis of the voltage signal when a person, for example, the person Q1b of FIG. 3, moves within the detection space S1 at a moving velocity in which the traverse component V12 is relatively large. That is, the first threshold is a threshold for detecting a person, for example, the person Q1b, moving at the moving velocity in which the traverse component V12 is relatively large (a threshold for the traverse detection). Moreover, the second threshold is set in advance on the basis of the voltage signal when a person, for example, the person Q1a of FIG. 3, moves within the detection space S1 at a moving velocity in which the approach component V11 is relatively large. That is, the second threshold is a threshold for detecting a person, for example, the person Q1a, moving at the moving velocity in which the approach component V11 is relatively large (a threshold for the approach detection).

### (1-4) Structure of Pyroelectric Element

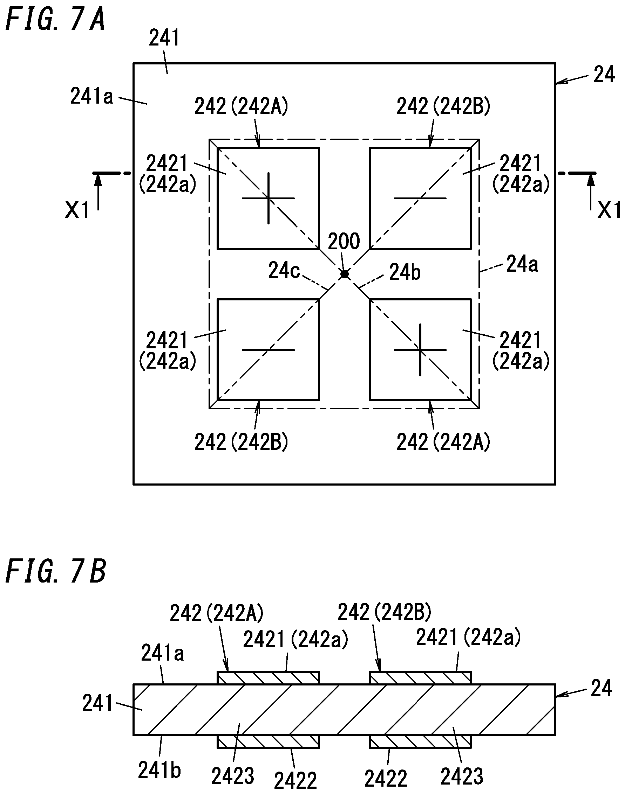

As shown in FIGS. 7A and 7B, the pyroelectric element 24 includes a pyroelectric substrate 241 and a plurality of detectors 242.

The pyroelectric element 24 of the present embodiment is, for example, a quad element including four detectors 242 formed on a single pyroelectric substrate 241. The four detectors 242 are arranged on the pyroelectric substrate 241 in a 2 × 2 array (matrix). Note that in the present embodiment, the pyroelectric element is a quad element including the four detectors 242 arranged in the 2 × 2 array (matrix). Note that the pyroelectric element 24 is at least an element including (N × N) detectors 242 arranged in an N × N array, where N is an integer greater than or equal to 2.

The pyroelectric substrate 241 is a pyroelectric substrate. The pyroelectric substrate 241 has a square plate shape in plan view. The pyroelectric substrate 241 is formed from, for example, a single crystal LiTaO₃ substrate. Of principal surfaces on both sides of the pyroelectric substrate 241, a principal surface facing the lens array 3 is defined as a front surface, and a principal surface opposite the front surface is defined as a back surface.

Each of the four detectors 242 is a capacitor including: a front side electrode 2421 formed on a front surface 241a of the pyroelectric substrate 241; a backside electrode 2422 formed on a back surface 241b of the pyroelectric substrate 241; and a portion 2423 of the pyroelectric substrate 241, the portion 2423 being located between the front side electrode 2421 and the backside electrode 2422.

The front side electrode 2421 and the backside electrode 2422 are, for example, square and have the same size. That is, the shape of each of the four detectors 242 in plan view is a square shape. The four detectors 242 include first detectors 242A in which the polarity of the front side electrodes 2421 is positive and second detectors 242B in which the polarity of the front side electrodes 2421 is negative. In FIG. 7A, the polarity of the front side electrodes 2421 of the first detectors 242A is indicated by a reference sign "+", and the polarity of the front side electrodes 2421 of the second detectors 242B is indicated by a reference sign "-". Each of the four detectors 242 has a light receiving surface 424a which is a front surface of the front side electrode 2421.

As described above, the pyroelectric element 24 is a quad element including the four detectors 242 arranged in a 2 × 2 array. The pyroelectric element 24 has the light receiving surface 24a which is rectangular (e.g., square) and which includes the front side electrodes 2421 of the four detectors 242 in plan view. That is, the light receiving surface 24a of the pyroelectric element 24 includes the light receiving surfaces 242a of the four detectors 242 arranged in the 2 × 2 matrix. Thus, each of the plurality of individual detection areas r1 included in the detection area R1 includes four effective areas r11 to r14 (see FIG. 8) corresponding to the light receiving surfaces 242a of the four detectors 242 arranged in the 2 × 2 matrix.

Of the four detectors 242 arranged in the 2×2 array in the pyroelectric element 24, two detectors 242 aligned in a direction along the first diagonal line 24b of the light receiving surface 24a having a rectangular shape are connected in parallel to each other, two detectors 242 aligned in a direction along a second diagonal line 24c of the light receiving surface 24a having the rectangular shape are connected in parallel to each other, two detectors 242 aligned in the row direction are connected in anti-parallel to each other, and two detectors 242 aligned in the column direction are connected in anti-parallel to each other.

In the pyroelectric element 24, the front side electrodes 2421 of the two detectors 242 aligned in the direction along the first diagonal line 24b have the same polarity. Moreover, in the pyroelectric element 24, the front side electrodes 2421 of the two detectors 242 aligned in the row direction have different polarities. In the pyroelectric element 24, the front side electrodes 2421 of the two detectors 242 aligned in the column direction have different polarities.

Such a structure improves the detection sensitivity of the pyroelectric element 24.

Note that the "rectangle" as used in the present embodiment means a right-angled quadrangle and is a concept including a rectangle and a square. In FIG. 7A, as an example of the light receiving surfaces 24a having the rectangular shape, a square light receiving surface 24a is shown. The normal to the center 200 of the light receiving surface 24a of the pyroelectric element 24 may be deemed to be an optical axis of the pyroelectric element 24.

### (1-5) Details of Detection Area

As shown in FIG. 8, the detection area R1 has a rectangular shape (i.e., a belt shape) corresponding to the shape (a rectangular shape (i.e., a belt shape)) of the path of the warehouse which is a detection target. A longitudinal direction of the detection area R1 coincides with the direction of the first diagonal line 24b of the light receiving surface 24a of the pyroelectric element 24, and the lateral direction of the detection area R1 coincides with the direction of the second diagonal line 24c of the light receiving surface 24a of the pyroelectric element 24.

The detection area R1 includes the plurality of individual detection areas r1 corresponding to the plurality of lenses 311 on a one-to-one basis. The plurality of individual detection areas r1 are arranged in a rectangular shape (i.e., a belt shape) corresponding to the shape of the path of the warehouse which is the detection target. The rectangular shape (the belt shape) of the detection area R1 is a shape that includes the arrangement of the plurality of individual detection areas r1.

The plurality of individual detection areas r1 are arranged, for example, in a staggered disposition. That is, the plurality of individual detection areas r1 include a plurality of rows 80 including individual detection areas r1. Each of the plurality of rows 80 extends along the longitudinal direction of the detection area R1. Moreover, the plurality of rows 80 are arranged to be aligned in the lateral direction of the detection area R1. Of the plurality of rows 80, odd numbered rows 80t counted from top to bottom on a paper surface of FIG. 8 are shifted in a longitudinal direction of the row 80 by a half individual detection area from even numbered rows 80u.

More specifically, in the center part R12 (the second detection area) of the detection area R1, the individual detection areas r1 are arranged in a staggered disposition. Thus, each individual detection area r1 in the center part R12 is arranged so as not to overlap individual detection areas adjacent thereto (i.e., individual detection areas r1 on the upper, lower, left, and right sides thereof on the paper surface of FIG. 8). This arrangement enables the pyroelectric element 24 to sensitively detect a person moving at a moving velocity in which the traverse speed V12 is higher than the approach speed V11 in the center part R12 (the second detection area) of the detection area R1.

Moreover, within the edge part R11 (the first detection area) on the left side in the detection area R1, respective leftmost individual detection areas r1 of the plurality of rows 80 are arranged to be aligned in line (a column 81) along the lateral direction of the detection area R1. Therefore, each individual detection area r1 within the edge part R11 on the left side partially overlaps individual detection areas r1 adjacent thereto (i.e., individual detection areas r1 on the upper, lower, and right sides on the paper surface of the FIG. 8). Moreover, within the edge part R11 on the right side in the detection area R1, respective rightmost individual detection areas r1 of the plurality of rows 80 are arranged to be aligned in line (a column 82) in the lateral direction of the detection area R1. Therefore, each individual detection area r1 within the edge part R11 on the right side partially overlaps individual detection areas r1 adjacent thereto (i.e., individual detection areas r1 on the upper, lower, and left sides on the paper surface of the FIG. 8). The overlap enables the pyroelectric element 24 to sensitively detect a person moving at a moving velocity in which the approach speed V11 is higher than the traverse speed V12 in the edge parts R11 (the first detection areas) on both sides in the detection area R1.

In the following description, the partial overlap of the adjacent individual detection areas r1 will be described in further detail.

Each individual detection area r1 has four effective areas r11 to r14. The four effective areas r11 to r14 correspond one-to-one to the light receiving surfaces 242a of the four detectors 242 arranged in the 2×2 array of the pyroelectric element 24. The four effective areas r11 to r14 are arranged in a 2 × 2 array. Each of the effective areas r11 to r14 has a shape (a square shape) similar to the shape (the square shape) of the light receiving surface 242a of the detector 242.

Each individual detection area r1 is disposed such that the square shape is rotated by 45 degrees to a rhombic shape. More specifically, the four effective areas r11 to r14 in each individual detection area r1 are arranged in a rhombic shape. That is, the direction of one diagonal line 90a of two diagonal lines 90a and 90b of each individual detection area r1 in which the four effective areas r11 to r14 are arranged in the 2×2 matrix coincides with the longitudinal direction of the detection area R1 (i.e., the direction of the first diagonal line 24b). Moreover, the direction of the other diagonal line 90b coincides with the lateral direction of the detection area R1 (i.e., the direction of the second diagonal line 24c).

Note that the direction of the one diagonal line 90a is a direction in which one group of the diagonally aligned effective areas r11 and r13 of the four effective areas r11 to r14 is aligned. The direction of the other diagonal line 90b is a direction in which the other group of the diagonally aligned effective areas r12 and r14 of the four effective areas r11 to r14 is aligned.

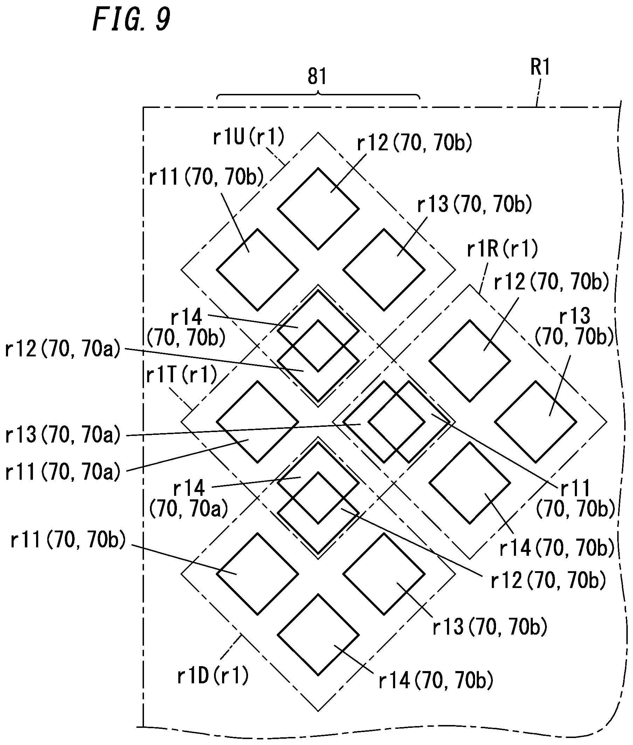

Each individual detection area r1 included in the edge parts R11 (the first detection areas) on both sides in the longitudinal direction of the detection area R1 (i.e., each individual detection area r1 in the left end column 81 and the right end column 82) partially overlaps individual detection areas r1 adjacent thereto as described above (see FIG. 8). More specifically, the four effective areas r11 to r14 in each individual detection area r1 included in the edge parts R11 on both sides in the detection area R1 partially overlap one of the four effective areas r11 to r14 in each of adjacent individual detection areas r1 (see FIG. 9). As shown in FIG. 9, of the four effective areas r11 to r14 in, for example, an individual detection area r1T in the left end column 81, the effective area r12 on an upper part in the individual detection area r1T partially overlaps the effective area r14 on a lower part in an individual detection area r1U on the upper side of the individual detection area r1T. Moreover, the effective area r14 on a lower part in the individual detection area r1T partially overlaps the effective area r12 on an upper part in an individual detection area r1D on the lower side of the individual detection area r1T. Further, the effective area r13 on a right part in the individual detection area r1T partially overlaps the effective area r11 on a left part in an individual detection area r1R on the right side of the individual detection area r1T.

Each individual detection area r1 included in the center part R12 (the second detection area) of the detection area R1 does not overlap individual detection areas r1 adjacent thereto. More specifically, the four effective areas r11 to r14 in each individual detection area r1 included in the center part R12 of the detection area R1 do not overlap the four effective areas r11 to r14 in adjacent individual detection areas r1.

### (1-6) Details of Detection Space

The detection space S1 (see FIGS. 2 and 3) includes a plurality of infrared reception paths 70 (see FIG. 2). In FIG. 2, only one infrared reception path 70 is shown, but a plurality of infrared reception paths 70 are present over the entire detection space S1. The plurality of infrared reception paths 70 correspond to all effective areas r11 to r14 in the detection area R1 on a one-to-one basis (i.e., the whole of the effective areas r11 to r14, where each individual detection area r1 includes the four effective areas r11 to r14). Moreover, each of the plurality of infrared reception paths 70 corresponds to any one of the plurality of lenses 311 and to any one of the four detectors 242 of the pyroelectric element 24. The plurality of infrared reception paths 70 extend from the respective effective areas of all effective areas r11 to r14 in the detection area R1 through the corresponding one lens 311 to the corresponding one detector of the four detectors 242 of the pyroelectric element 24. In other words, the infrared reception paths 70 are infrared passage regions through which infrared radiation fluxes pass. The infrared radiation fluxes are used to form images on the four light receiving surfaces 242a of the detectors 242 of the pyroelectric element 24. In still other words, the infrared reception paths 70 are effective regions for detecting infrared radiation from a human body. There are infrared reception paths 70 as many as the number of plurality of lenses 311 multiplied by the number of the four detectors 242 of the pyroelectric element 24.

The detection area R1 is the cross section of the detection space S1 when the detection space S1 is cut along a virtual plane (e.g., virtual plane corresponding to a surface of the path) parallel to the path of the warehouse, which is the detection target. Each of all the effective areas r11 to r14 in the detection area R1 is a cross section of a corresponding one of the infrared reception paths 70 when the corresponding one of the infrared reception path 70 is cut along the virtual plane.

### (1-7) Lens Arrangement of Lens Array

As shown in FIG. 10, the plurality of lenses 311 of the lens array 3 are disposed on the back surface of the lens array 3 (more specifically, back surface of the lens array body 31). The plurality of lenses 311 are, for example, aspheric lenses. The plurality of lenses 311 are arranged longitudinally and laterally to constitute a lens group having a rectangular shape (i.e., a belt shape) in plan view from a back surface side of the lens array 3 (hereinafter referred to as a "plan view of the lens array 3"). Thus, the shape H1, which includes the arrangement of the plurality of lenses 311 (i.e., the lens group) in plan view of the lens array 3, is a rectangular shape (i.e., a belt shape).

The lens array 3 has a first portion M1 and a second portion M2 on a peripheral end of the lens array 3. The peripheral end of the lens array 3 is a circumferential edge of a circular opening of the lens array 3. The first portion M1 is a portion on the peripheral end of the lens array 3. The second portion M2 faces the first portion M1 on the back surface of the lens array 3 while a center CT1 of the back surface of the lens array 3 is located between the second portion M2 and the first portion M1. The plurality of lenses 311 (i.e., the lens group) are arranged in a belt shape (i.e., a rectangular shape) on the back surface of the lens array 3 from the side of the first portion M1 (e.g., a proximity to the first portion M1) via the center CT1 toward the side of the second portion M2 (e.g., a proximity to the second portion M2). The belt shape H1 is the shape of the arrangement of the plurality of lenses 311 (the lens arrangement). That is, the shape H1 of the arrangement of the plurality of lenses 311 extends in a rectangular shape (i.e., a belt shape) on the back surface of the lens array 3 from the first portion M1 via the center CT1 toward the second portion M2. The shape H1 of the lens arrangement is a rectangular shape (i.e., a belt shape) extending in a direction along the first diagonal line 24b of the light receiving surface 24a of the pyroelectric element 24 in plan view of the lens array 3.

The plurality of lenses 311 (i.e., the lens group) include a lens row 311s including lenses aligned in a direction along the first diagonal line 24b of the pyroelectric element 24 on the back surface of the lens array 3. Moreover, the plurality of lenses 311 (i.e., the lens group) include a plurality of lens rows 311s aligned parallel to a direction along the second diagonal line 24c of the pyroelectric element 24 on the back surface of the lens array 3. Of the plurality of lens rows 311s, odd-numbered lens rows 311t counted from top to bottom on a paper surface of FIG. 10 are disposed by being shifted in the longitudinal direction of the lens rows 311s by a half of a lens from even-numbered lens rows 311u. That is, the plurality of lenses 311 are arranged in a staggered disposition.

The plurality of lenses 311 include first lenses 311p, 311q and second lenses 311w. The first lenses 311p are lenses 311 in an edge part (first area) 95 on the left side in a longitudinal direction of the shape H1 of the lens arrangement and are, for example, lenses 311 in the left end column of the lens arrangement. The first lenses 311p correspond one-to-one to individual detection areas r1 in the edge part R11 (the first detection area) on the left side in the longitudinal direction of the detection area R1 (i.e., the individual detection areas r1 in the left end column 81). The first lenses 311q are lenses 311 in an edge part (first area) 95 on the right side in the longitudinal direction of the shape H1 of the lens arrangement and are, for example, lenses 311 in the left end column of the lens arrangement. The first lenses 311q correspond one-to-one to individual detection areas r1 in the edge part R11 (the first detection area) on the right side in the longitudinal direction of the detection area R1 (i.e., the individual detection areas r1 in the right end column 82). The second lenses 311w are lenses 311 in a center part (second area) 96 in the longitudinal direction of the shape H1 of the lens arrangement and correspond one-to-one to individual detection areas r1 in the center part R12 (the second detection area) in the longitudinal direction of the detection area R1.

The arrangement and the shape of each first lens 311p in the left end column is set such that a condition A described below is satisfied. The condition A is that in the detection area R1, one of the four effective areas r11 to r14 in each individual detection area r1 corresponding to an associated one of the first lenses 311p in the left end column (i.e., each individual detection area r1 in the edge part R11 on the left side) partially overlaps one of the four effective areas r11 to r14 in an adjacent individual detection area r1.

In the present embodiment, for example, the individual detection areas r1 in the edge part R11 on the left side in the detection area R1 are arranged in line along the second diagonal line 24c as described above, thereby satisfying the condition A. To that end, for example, the arrangement and the shape of the first lenses 311p in the left end column are set such that the individual detection areas r1 located in the edge part R11 on the left side in the detection area R1 and corresponding to the first lenses 311p in the left end column are arranged in line along the second diagonal line 24c. Specifically, even-numbered first lenses 311pu of the first lenses 311p in the left end column have a size reduced by half such that left ends of the first lenses 311p in the left end column are aligned linearly in general. That is, the plurality of lenses 311 are arranged in a staggered disposition, and thus, the even-numbered first lenses 311pu of the first lenses 311p in the left end column would basically protrude leftward by half a lens. However, the even-numbered first lenses 311pu actually have the size reduced by half such that the left ends of the first lenses 311p in the left end column are aligned linearly in general.

Moreover, the arrangement and the shape of each first lens 311q in the right end column are set such that a condition B described below is satisfied. The condition B is that in the detection area R1, one of the four effective areas r11 to r14 in each individual detection area r1 corresponding to an associated one of the first lenses 311q in the right end column (i.e., each individual detection area r1 in the edge part R11 on the right side) partially overlaps one of the four effective areas r11 to r14 in an adjacent individual detection area r1.

In the present embodiment, for example, the individual detection areas r1 in the edge part R11 on the right side in the detection area R1 are arranged in line along the second diagonal line 24c as described above, thereby satisfying the condition B. To that end, for example, the arrangement and the shape of the first lenses 311p in the right end column are set such that the individual detection areas r1 located in the edge part R11 on the right side in the detection area R1 and corresponding to the first lenses 311p in the right end column are arranged in line along the second diagonal line 24c. Also in this case, in a similar manner to the case of the first lenses 311p, specifically, even-numbered first lenses 311q of the first lenses 311q in the right end column have a size reduced by half such that right ends of the first lenses 311q in the right end column are aligned linearly in general.

Moreover, the arrangement and the shape of each second lens 311w are set such that a condition C described below is satisfied. The condition C is that in the detection area R1, the four effective areas r11 to r14 in each individual detection area r1 (i.e., each individual detection area r1 in the center part R12) corresponding to an associated one of the second lenses 311w do not overlap the four effective areas r11 to r14 in an adjacent individual detection area r1.

In the present embodiment, for example, the individual detection areas r1 in the center part R12 are arranged in a staggered disposition in the detection area R1 as described above, thereby satisfying the condition C. To that end, for example, the arrangement and the shape of the second lenses 311w are set such that the individual detection areas r1 in the center part R12 in the detection area R1 corresponding to the second lenses 311w are arranged in a staggered disposition.

Thus, the lens array 3 has the first areas 95 one of which includes the first lenses 311p satisfying the condition A and the other of which includes the first lenses 311q satisfying the condition B. Thus, in the detection area R1 is provided the first detection area R11 in which adjacent individual detection areas r1 partially overlap each other (i.e., one of the effective areas r11 to r14 in one individual detection area r1 and one of the effective areas r11 to r14 in an individual detection area r1 adjacent to the one individual detection area r1 partially overlaps each other). Moreover, in the lens array 3, the second area 96 including the second lenses 311w satisfying the condition C is provided. Thus, in the detection area R1 is provided the second detection area R12 in which adjacent individual detection areas r1 do not overlap each other (i.e., the effective areas r11 to r14 in adjacent individual detection areas r1 do not overlap each other).

### (1-8) Details of Infrared Reception Path

As shown in FIG. 9, the plurality of infrared reception paths 70 include a plurality of first infrared reception paths 70a and a plurality of second infrared reception paths 70b. The plurality of first infrared reception paths 70a are four infrared reception paths 70 defined by an arbitrary one lens 311 of the plurality of lenses 311 and the four detectors 242 of the pyroelectric element 24. The plurality of second infrared reception paths 70b are four infrared reception paths 70 defined by one lens 311 included in the plurality of lenses 311 and adjacent to the arbitrary one lens 311 and the four detectors 242.

Further, as shown in FIG. 10, the lens array 3 includes the first areas 95 and the second area 96 as described above. The first areas 95 of the lens array 3 are areas including one or more first lenses 311p, 311q of the plurality of lenses 311. In the present embodiment, the first areas 95 are, for example, edge parts on both sides in the longitudinal direction of the shape H1 of the lens arrangement. The second area 96 of the lens array 3 is an area including one or more second lenses 311w of the plurality of lenses 311. In the present embodiment, the second area 96 is, for example, a center part in the longitudinal direction of the shape H1 of the lens arrangement. At this time, the first lenses 311p, 311q and the second lenses 311w satisfy conditions Aa to Ac described below.

Condition Aa: the one or more first lenses 311p are respectively one or more lenses in each of which one first infrared reception path 70a of four first infrared reception paths 70a defined by a corresponding one of the one or more first lenses 311p and the four detectors 242 of the pyroelectric element 24 and one second infrared reception path 70b of four second infrared reception paths 70b defined by one lens 311 included in the plurality of lenses 311 and adjacent to the corresponding one of the one or more first lenses 311p and the four detectors 242 partially overlap each other.

Condition Ba: the one or more first lenses 311q are respectively one or more lenses in each of which one first infrared reception path 70a of four first infrared reception paths 70a defined by a corresponding one of the one or more first lenses 311q and the four detectors 242 of the pyroelectric element 24 and one second infrared reception path 70b of four second infrared reception paths 70b defined by one lens 311 included in the plurality of lenses 311 and adjacent to the corresponding one of the one or more first lenses 311q and the four detectors 242 partially overlap each other.

Condition Ca: the one or more second lenses 311w are respectively one or more lenses in each of which four first infrared reception paths 70a defined by a corresponding one of the one or more second lenses 311w and the four detectors 242 of the pyroelectric element 24 and four second infrared reception paths 70b defined by one lens included in the plurality of lenses 311 and adjacent to the corresponding one of the one or more second lenses 311w and the four detectors 242 do not overlap each other.

The one first infrared reception path 70a and the one second infrared reception path 70b overlapping each other correspond to respective detectors which are included in the four detectors 242 and which are different from each other. Moreover, the one first infrared reception path 70a and the one second infrared reception path 70b overlapping each other correspond to respective detectors which are included in the four detectors 242 and whose front side electrodes 2421 have the same polarity. These improve the detection sensitivity of the pyroelectric element 24.

The conditions Aa to Ca correspond to contents obtained by redefining, by using the infrared reception paths 70, the conditions A to C defined by using the effective areas r11 to r14. Considering that the effective areas r11 to r14 are cross sections of the infrared reception paths 70 cut along the virtual plane, the conditions Aa to Ca respectively correspond to, and are substantially the same contents as, the conditions A to C described above.

### (1-9) Lens-Free Area of Lens Array

As shown in FIG. 10, the lens array 3 has lens-free areas W1 in which the plurality of lenses 311 are not disposed. More specifically, the lens-free areas W1 are areas which are included in the back surface of the lens array body 31 and in which the plurality of lenses 311 are not disposed. The lens-free areas W1 are, for example, disposed on both sides of the plurality of lenses 311 (i.e., the lens group) in a direction along the second diagonal line 24c of the pyroelectric element 24. The lens-free areas W1 are areas overlapping a region other than the path of the warehouse (i.e., a region other than the detection target). Since no lens 311 is disposed in the lens-free area W1, infrared radiation from regions, which correspond to the lens-free areas W1, of a floor surface of the warehouse (i.e., regions other than the path) is not condensed onto the pyroelectric element 24. Thus, detection of human body is not performed in the regions other than the path. As described above, providing the lens-free areas W1 for the lens array body 31 enables the detection area R1 to be formed in only a region (e.g., the path of the warehouse) where the detection of the human body is required.

Note that lens-free areas W1 may be additionally/alternatively disposed on both sides of the plurality of lenses 311 (i.e., the lens group) in the direction along the first diagonal line 24b of the pyroelectric element 24.

Note that the lens-free areas W1 on the back surface of the lens array 3 may be subjected to emboss processing.

### (1-10) Explanation of Operation of Human Body Detection Device

The human body detection device 1 is installed, for example, on the ceiling of the warehouse with the light receiving surface 23a of the pyroelectric element 24 facing downward. Thus, the human body detection device 1 detects a person passing in a predetermined range (the detection area R1) of the path located on the lower side thereof.

In the human body detection device 1, when a person Q1a, Q1b moves within the detection area R1, the person Q1a, Q1b moves across at least one effective area of all the effective areas r11 to r14 in the detection area R1 (i.e., the whole of the effective areas r11 to r14, where each individual detection area r1 includes the four effective areas r11 to r14) (see FIGS. 3 and 8). At this time, the person Q1a, Q1b moves across the infrared reception path 70 corresponding to the at least one effective area. When the person Q1a, Q1b moves across the infrared reception path 70, the infrared radiation from the person Q1a, Q1b passes through the infrared reception path 70 and is received by one of the four detectors 242 of the pyroelectric element. When the level of the output signal of the pyroelectric element 24 exceeds a first threshold T1 or a second threshold T2 due to the reception of the infrared radiation as described above, the determination unit 26 detects the person Q1a, Q1b.

More specifically, when the person Q1a moves in the edge parts R11 (the first detection areas) on both sides in the longitudinal direction of the detection area R1, the feature is that in the moving velocity V1 of the person Q1a, the approach component V11 is larger than the traverse component V12. Therefore, in the first detection areas R11 of the detection area R1, one of the four effective areas r11 to r14 in the individual detection area r1 in each edge part R11 and one of the four effective areas r11 to r14 in an adjacent individual detection area r1 overlap each other as described above. The overlap enables the human body detection device 1 to sensitively detect the person Q1a moving in each first detection area R11 at a moving velocity in which the approach component V11 is larger than the traverse component V12.

Moreover, when the person Q1b moves in the center part R12 (the second detection area) in the longitudinal direction of the detection area R1, the feature is that in the moving velocity V1 of the person Q1b, the traverse component V12 is larger than the approach component V11. Therefore, in the second detection area R12 of the detection area R1, the four effective areas r11 to r14 in the individual detection area r1 and the four effective areas r11 to r14 in adjacent individual detection areas r1 in the center part R12 do not overlap each other as described above. Thus, the human body detection device 1 sensitively detects the person Q1b moving in the second detection area R12 at a moving velocity in which the traverse component V12 is larger than the approach component V11.

### (1-11) Main Effects

The human body detection device 1 according to the present embodiment includes the pyroelectric element 24, the lens array 3, and the determination unit 26. The pyroelectric element 24 includes the plurality of detectors 242. The lens array 3 includes the plurality of lenses 311 configured to condense infrared radiation onto the pyroelectric element 24. The determination unit 26 outputs a human body detection signal on the basis of an output signal of the pyroelectric element 24. each of the plurality of lenses 311 and the plurality of detectors 242 define the plurality of infrared reception paths 70. The plurality of infrared reception paths 70 include the plurality of first infrared reception paths 70a and the plurality of second infrared reception paths 70b. The plurality of first infrared reception paths 70a are defined by an arbitrary one lens 311 of the plurality of lenses 311 and the plurality of detectors 242. The plurality of second infrared reception paths 70b are defined by one lens 311 included in the plurality of lenses 311 and adjacent to the arbitrary one lens 311 and the plurality of detectors 242. The lens array 3 has the first areas 95 and the second area 96. The first areas 95 include one or more first lenses 311p, 311q of the plurality of lenses 311. The second area 96 includes one or more second lenses 311w of the plurality of lenses 311. The one or more first lenses 311p, 311q are respectively one or more lenses in each of which one first infrared reception path 70a of the plurality of first infrared reception paths 70a defined by a corresponding one of the first lenses 311p, 311q and the plurality of detectors 242 of the pyroelectric element 24 and one second infrared reception path 70b of the plurality of second infrared reception paths 70b defined by one lens 311 included in the plurality of lenses 311 and adjacent to the corresponding one of the one or more first lenses 311p, 311q and the plurality of detectors 242 overlap each other. The one or more second lenses 311w are respectively one or more lenses in each of which the plurality of first infrared reception paths 70a defined by a corresponding one of the one or more second lenses 311w and the plurality of detectors 242 of the pyroelectric element 24 and the plurality of second infrared reception paths 70b defined by one lens 311 included in the plurality of lenses 311 and adjacent to the corresponding one of the one or more second lenses 311w and the plurality of detectors 242 do not overlap each other.

This configuration enables the detection area R1 of the human body detection device 1 to include the first detection areas R11 corresponding to the first areas 95 of the lens array 3 and the second detection area R12 corresponding to the second area 96 of the lens array 3. In each of the first detection areas R11, one first infrared reception path 70a and one second infrared reception path 70b overlap each other as described above, and thereby, the approach detection can sensitively be performed. In the second detection area R12, the first infrared reception paths 70a and the second infrared reception paths 70b do not overlap each other as described above, and thereby, the traverse detection can sensitively be performed. That is, in the detection area R1, both the approach detection and the traverse detection can sensitively be performed.

### (1-12) Variations

Variations of the embodiment will be described below. In the following description, the same components as those in the embodiment described above are denoted by the same reference signs as those in the embodiment, and the description thereof may be omitted, and only the differences from the embodiment may be described.

### (1-12-1) First Variation

In the embodiment described above, the first areas 95 are disposed at edge parts in the longitudinal direction of the shape H1 of the lens arrangement, and the second area 96 is disposed at the center part in the shape H1 of the lens arrangement in the lens array 3 as shown in FIG. 10. However, the disposition of the first areas 95 and the second area 96 is not limited to the above example, but the first areas 95 and the second area 96 may be disposed at any parts on the back surface of the lens array 3 (more specifically, the back surface of the lens array body 31). In that case, the first areas 95 are desirably disposed closer to an outer perimeter of the lens array 3 than the second area 96 is. Moreover, the second area 96 is preferably disposed closer to the center of the lens array 3 than the first areas 95 are.

### (1-12-2) Second Variation

In the embodiment described above, the first areas 95 of the lens array 3 are disposed at the edge parts on both sides in the longitudinal direction of the plurality of lenses 311 (i.e., the lens group) (see FIG. 10). However, first areas 95 of the lens array 3 may be disposed at edge parts on both sides in the lateral direction of the plurality of lenses 311 (i.e., the lens group) (i.e., parts adjacent to the lens-free areas W1) in addition to the first areas 95 of the embodiment or in place of the first areas 95 of the embodiment.

### (1-12-3) Third Variation

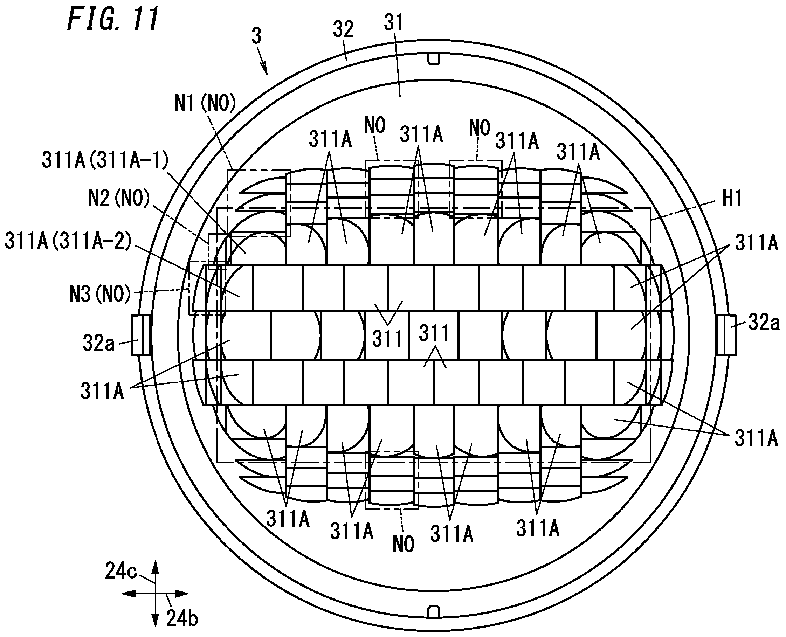

As shown in FIG. 11, lenses 311A aligned at an outer perimeter of the plurality of lenses 311 of the lens array 3 in the embodiment described above may be made into Fresnel lenses. More specifically, a saw-shaped lens N0 included in a saw-shaped lens portion of a Fresnel lens is disposed in a void space on an outer perimeter side of each lens 311A (i.e., areas in which no lens 311 is disposed). For example, a saw-shaped lens N1 having three projections is disposed on the upper side of a lens 311A-1, and a saw-shaped lens N2 having one projection is disposed on the left side of the lens 311A-1. Moreover, a saw-shaped lens N3 having two projections is disposed on the left side of a lens 311A-2. Making the lenses 311A into Fresnel lenses can condense an increased quantity of light.

### (1-12-4) Fourth Variation

In the embodiment described above, the first diagonal line 24b of the pyroelectric element 24 extends in the longitudinal direction of the arrangement of the plurality of lenses 311 (the lens group). Note that the second diagonal line 24c of the pyroelectric element 24 may extend in the longitudinal direction of the arrangement of the plurality of lenses 311 (the lens group).

### (1-12-5) Fifth Variation

In the embodiment described above, an example has been shown in which the plurality of lenses 311 are arranged in a rectangular shape in conformity with the shape (rectangular shape) of the detection area R1. However, the shape of the arrangement of the plurality of lenses 311 is not limited to the rectangular shape. For example, when the detection area R1 has a circular shape, the plurality of lenses 311 may be arranged in a circular shape.

### (2) Aspects

Based on the embodiment and the variations, the present disclosure includes the following aspects.

A human body detection device (1) of a first aspect includes a pyroelectric element (24), a lens array (3), and a determination unit (26). The pyroelectric element (24) includes a plurality of detectors (242). The lens array (3) includes a plurality of lenses (311) configured to condense infrared radiation onto the pyroelectric element (24). The determination unit (26) is configured to output a human body detection signal on a basis of an output signal of the pyroelectric element (24). Each of the plurality of lenses (311) and the plurality of detectors (242) define a plurality of infrared reception paths (70). The plurality of infrared reception paths (70) include a plurality of first infrared reception paths (70a) and a plurality of second infrared reception paths (70b). The plurality of first infrared reception paths (70a) are defined by an arbitrary one lens (311) of the plurality of lenses (311) and the plurality of detectors (242). The plurality of second infrared reception paths (70b) are defined by one lens (311) included in the plurality of lenses (311) and adjacent to the arbitrary one lens (311) and the plurality of detectors (242). The lens array (3) has a first area (95) and a second area (96). The first area (95) includes one or more first lenses (311p, 311q) of the plurality of lenses (311). The second area (96) includes one or more second lenses (311w) of the plurality of lenses (311). The one or more first lenses (311p, 311q) are respectively one or more lenses in each of which one first infrared reception path (70a) of the plurality of first infrared reception paths (70a) defined by a corresponding one of the one or more first lenses (311p, 311q) and the plurality of detectors (242) and one second infrared reception path (70b) of the plurality of second infrared reception paths (70b) defined by one lens (311) included in the plurality of lenses (311) and adj acent to the corresponding one of the one or more first lenses (311p, 311q) and the plurality of detectors (242) overlap each other. The one or more second lenses (311w) are respectively one or more lenses in each of which the plurality of first infrared reception paths (70a) defined by a corresponding one of the one or more second lenses (311w) and the plurality of detectors (242) and the plurality of second infrared reception paths (70b) defined by one lens (311) included in the plurality of lenses (311) and adjacent to the corresponding one of the one or more second lenses (311w) and the plurality of detectors (242) do not overlap each other.

This configuration enables a detection area (R1) of the human body detection device (1) to include: a first detection area (R11) corresponding to the first area (95) of the lens array (3); and a second detection area (R12) corresponding to the second area (96) of the lens array (3). In the first detection area (R11), the one first infrared reception path (70a) and the one second infrared reception path (70b) overlap each other as described above, thereby enabling approach detection to sensitively be performed. In the second detection area (R12), the first infrared reception paths (70a) and the second infrared reception paths (70b) do not overlap each other as described above, thereby enabling traverse detection to sensitively be performed. That is, in the detection area (R1), both the approach detection and the traverse detection can sensitively be performed.

In a human body detection device (1) of a second aspect referring to the first aspect, the plurality of detectors (242) include respective front side electrodes (2421) and respective backside electrodes (2422). The one first infrared reception path (70a) and the one second infrared reception path (70b) overlapping each other correspond to respective detectors (242) which are included in the plurality of detectors (242) and whose front side electrodes (2421) have a same polarity.

This configuration enables the detection sensitivity of the human body detection device (1) to be improved.

In a human body detection device (1) of a third aspect referring to the first or second aspect, the plurality of detectors (242) include respective front side electrodes (2421) and respective backside electrodes (2422). The pyroelectric element (24) is a quad element including four detectors (242) as the plurality of detectors (242), the four detectors (242) being arranged in a 2 × 2 array. The pyroelectric element (24) has a rectangular light receiving surface (24a) including the respective front side electrodes (2421) of the plurality of detectors (242) in plan view of the pyroelectric element (24). Of the four detectors (242) arranged in the 2 × 2 array, two detectors (242) aligned in a direction along a first diagonal line (24b) of the rectangular light receiving surface (24a) are connected in parallel to each other, two detectors (242) aligned in a direction along a second diagonal line (24c) of the rectangular light receiving surface (24a) are connected in parallel to each other, two detectors (242) aligned in a row direction are connected in anti-parallel to each other, and two detectors (242) aligned in a column direction are connected in anti-parallel to each other. The respective front side electrodes (2421) of the two detectors (242) aligned in the direction along the first diagonal line (24b) have a same polarity. The respective front side electrodes (2421) of the two detectors (242) aligned in the row direction have different polarities. The respective front side electrodes (2421) of the two detectors (242) aligned in the column direction have different polarities. The one first infrared reception path (70a) and the one second infrared reception path (70b) overlapping each other correspond to respective detectors (242) which are included in the plurality of detectors (242) and which are different from each other.

This configuration enables the detection sensitivity of the human body detection device (1) to be improved.

In a human body detection device (1) of a fourth aspect referring to any one of the first to third aspects, in the lens array (3), the first area (95) is disposed closer to an outer periphery of the lens array (3) than the second area (96) is. In the lens array, the second area (96) is disposed closer to a center of the lens array (3) than the first area (95) is.

This configuration enables the first detection area (R11) corresponding to the first area (95) of the lens array (3) (i.e., an area in which the approach detection can sensitively be performed) to be disposed at the side of the outer periphery in the detection area (R1) of the human body detection device (1) (i.e., in an area in which an approach speed (V11) is more likely to be higher than a traverse speed (V12) of a moving velocity (V1) of a person). This configuration further enables the second detection area (R12) corresponding to the second area (96) of the lens array (3) (i.e., an area in which the traverse detection can sensitively be performed) to be disposed at the side of the center in the detection area (R1) (i.e., in an area in which the traverse component (V12) is more likely to be greater than the approach component (V11) of the moving velocity (V1) of the person). This enables detection of a person moving at a moving velocity (V1) in which the approach component (V11) is greater than the traverse component (V12) and a person moving at a moving velocity (V1) in which the traverse component (V12) is greater than the approach component (V11) to be effectively performed in the detection area (R1).

In a human body detection device (1) of a fifth aspect referring to any one of the first to fourth aspects, the plurality of detectors (242) are (N × N) detectors (242) arranged in an N × N array, where N is an integer. Two diagonal lines in an arrangement in the N × N array of the plurality of detectors (242) are defined as a first diagonal line (24b) and a second diagonal line (24c). The plurality of lenses (311) constitute a lens group including lens rows (311s) aligned in a direction along the first diagonal line (24b) in the lens array (3).

This configuration enables a detection area (R1) having a shape extending in the direction along the first diagonal line (24b) to be formed as the detection area (R1) of the human body detection device (1). This configuration further enables the disposition density of the lenses (311) to be increased in the direction along the first diagonal line (24b).

In a human body detection device (1) of a sixth aspect referring to the fifth aspect, the lens group includes a plurality of lens rows (311s) aligned in a direction along the second diagonal line (24c) in the lens array (3).

This configuration enables a detection area (R1) having a shape extending in a direction along the second diagonal line (24c) to be further formed as the detection area (R1) of the human body detection device (1). This configuration further enables the disposition density of the lenses (311) to be increased in the direction along the second diagonal line (24c).

In a human body detection device (1) of a seventh aspect referring to the fifth or sixth aspect, the lens array (3) has a first portion (M1) and a second portion (M2). The first portion (M1) is disposed on a peripheral end of the lens array (3). The second portion (M2) is disposed on the peripheral end of the lens array (3) and faces the first portion (M1) with a center (CT1) of the lens array (3) located between the second portion (M2) and the first portion (M1). The lens group is arranged to have a belt shape extending from the first portion (M1) through the center (CT1) toward the second portion (M2) in the lens array (3).

This configuration enables a belt-shaped detection area (R1) to be formed as the detection area (R1) of the human body detection device (1).

In a human body detection device (1) of an eighth aspect referring to any one of the fifth to seventh aspects, the lens array (3) has at least one lens-free area (W1) in which no plurality of lenses (311) are disposed.

In this configuration, the at least one lens-free area (W1) is provided for the lens array (3), thereby enabling the detection area (R1) to be formed only in an area in which human body detection is required in a place which is a sensing target.

In a human body detection device (1) of a ninth aspect referring to the eighth aspect, the at least one lens-free area (W1) includes a plurality of lens-free areas one disposed on each of both sides of the lens group in a direction along the first diagonal line (24b) or the second diagonal line (24c).

This configuration enables non-detection areas to be disposed on both sides of the detection area (R1) in the direction along the first diagonal line (24b) or the second diagonal line (24c) of the pyroelectric element (24).

In a human body detection device (1) of a tenth aspect referring to the eighth aspect, the first area (95) of the lens array (3) is disposed in the lens group such that the first area (95) is adjacent to the at least one lens-free area (W1).

This configuration enables the first detection area (R11) corresponding to the first area (95) of the lens array (3) to be disposed in the detection area (R1) such that the first detection area (R11) is adjacent to the non-detection area.

In a human body detection device (1) of an eleventh aspect referring to any one of the fifth to tenth aspects, the first diagonal line (24b) of the pyroelectric element (24) extends along a longitudinal direction or a lateral direction of the lens group arranged in a belt shape.

This configuration enables the first diagonal line (24b) of the pyroelectric element (24) to be aligned with the longitudinal direction or the lateral direction of the belt-shaped detection area (R1). This can improve the disposition density of the lenses (311) and, as a result, can improve the detection sensitivity of the human body detection device (1).

### Reference Signs List

- 1: Human Body Detection Device
- 3: Lens Array
- 24: Pyroelectric Element
- 24a: Light Receiving Surface
- 24b: First Diagonal Line
- 24c: Second Diagonal Line
- 26: Determination Unit
- 70: Infrared Reception Path
- 70a: First Infrared Reception Path
- 70b: Second Infrared Reception Path
- 95: First Area
- 96: Second Area
- 242: Detector
- 242A: First Detector
- 232B: Second Detector
- 2421: Front Side Electrode
- 2422: Backside Electrode
- 311: Lens
- 311p, 311q: First Lens
- 311s: Lens Row
- 311w: Second Lens
- CT1: Center
- M1: First Portion
- M2: Second Portion
- R1: Detection Area
- R11: Edge Part (First Detection Area)
- R12: Center Part (Second Detection Area)
- V1: Moving Velocity
- V11: Approach Speed
- V12: Traverse Speed
- W1: Lens-Free Area

## Claims

1. A human body detection device comprising:
a pyroelectric element including a plurality of detectors;
a lens array including a plurality of lenses configured to condense infrared radiation onto the pyroelectric element; and
a determination unit configured to output a human body detection signal on a basis of an output signal of the pyroelectric element,
each of the plurality of lenses and the plurality of detectors defining a plurality of infrared reception paths,
the plurality of infrared reception paths including
a plurality of first infrared reception paths defined by an arbitrary one lens of the plurality of lenses and the plurality of detectors and
a plurality of second infrared reception paths defined by one lens included in the plurality of lenses and adjacent to the arbitrary one lens and the plurality of detectors,
the lens array having
a first area including one or more first lenses of the plurality of lenses and
a second area including one or more second lenses of the plurality of lenses,
the one or more first lenses being respectively one or more lenses in each of which one first infrared reception path of the plurality of first infrared reception paths defined by a corresponding one of the one or more first lenses and the plurality of detectors and one second infrared reception path of the plurality of second infrared reception paths defined by one lens included in the plurality of lenses and adjacent to the corresponding one of the one or more first lenses and the plurality of detectors overlap each other,
the one or more second lenses being respectively one or more lenses in each of which the plurality of first infrared reception paths defined by a corresponding one of the one or more second lenses and the plurality of detectors and the plurality of second infrared reception paths defined by one lens included in the plurality of lenses and adjacent to the corresponding one of the one or more second lenses and the plurality of detectors do not overlap each other.

2. The human body detection device of claim 1, wherein
the plurality of detectors include respective front side electrodes and respective backside electrodes, and
the one first infrared reception path and the one second infrared reception path overlapping each other correspond to respective detectors which are included in the plurality of detectors and whose front side electrodes have a same polarity.

3. The human body detection device of claim 1 or 2, wherein
the plurality of detectors include respective front side electrodes and respective backside electrodes,
the pyroelectric element is a quad element including four detectors as the plurality of detectors, the four detectors being arranged in a 2 × 2 array,
the pyroelectric element has a rectangular light receiving surface including the respective front side electrodes of the plurality of detectors in plan view of the pyroelectric element,
of the four detectors arranged in the 2 × 2 array,
two detectors aligned in a direction along a first diagonal line of the rectangular light receiving surface are connected in parallel to each other,
two detectors aligned in a direction along a second diagonal line of the rectangular light receiving surface are connected in parallel to each other,
two detectors aligned in a row direction are connected in anti-parallel to each other, and
two detectors aligned in a column direction are connected in anti-parallel to each other,
the respective front side electrodes of the two detectors aligned in the direction along the first diagonal line have a same polarity,
the respective front side electrodes of the two detectors aligned in the row direction have different polarities,
the respective front side electrodes of the two detectors aligned in the column direction have different polarities, and
the one first infrared reception path and the one second infrared reception path overlapping each other correspond to respective detectors which are included in the plurality of detectors and which are different from each other.

4. The human body detection device of any one of claims 1 to 3, wherein
in the lens array, the first area is disposed closer to an outer periphery of the lens array than the second area is, and
in the lens array, the second area is disposed closer to a center of the lens array than the first area is.

5. The human body detection device of any one of claims 1 to 4, wherein
the plurality of detectors are (N × N) detectors arranged in an N × N array, where N is an integer greater than or equal to 2,
two diagonal lines in an arrangement in the N × N array of the plurality of detectors are defined as a first diagonal line and a second diagonal line, and
the plurality of lenses constitute a lens group including lens rows aligned in a direction along the first diagonal line in the lens array.

6. The human body detection device of claim 5, wherein
the lens group includes a plurality of lens rows aligned in a direction along the second diagonal line in the lens array.

7. The human body detection device of claim 5 or 6, wherein
the lens array has
a first portion disposed on a peripheral end of the lens array and
a second portion disposed on the peripheral end of the lens array and facing the first portion with a center of the lens array located between the second portion and the first portion, and
the lens group is arranged to have a belt shape extending from the first portion through the center toward the second portion in the lens array.

8. The human body detection device of any one of claims 5 to 7, wherein
the lens array has at least one lens-free area in which no plurality of lenses are disposed.

9. The human body detection device of claim 8, wherein
the at least one lens-free area includes a plurality of lens-free areas one disposed on each of both sides of the lens group in a direction along the first diagonal line or the second diagonal line.

10. The human body detection device of claim 8, wherein
the first area of the lens array is disposed in the lens group such that the first area is adjacent to the at least one lens-free area.

11. The human body detection device of any one of claims 5 to 10, wherein
the first diagonal line of the pyroelectric element extends along a longitudinal direction or a lateral direction of the lens group arranged in a belt shape.
